# EUROPÄISCHE PATENTSCHRIFT

(11) **EP 1 182 647 B1**
(45) Veröffentlichungstag und Bekanntmachung des Hinweises auf die Patenterteilung: **28.11.2007**
(21) Anmeldenummer: 01000392.9
(22) Anmeldetag: 21.08.2001
(51) Int. Cl.: G10L 15/20, G10L 21/02

(54) **Verfahren zum Steuern von Geräten mittels Sprachsignalen in Umgebungen mit hohem Geräuschpegel**
Method of voice control over devices in noisy environments
Méthode de contrôle vocal d'appareils en milieu bruité

(30) Priorität: 23.08.2000 DE 10041456
(43) Veröffentlichungstag der Anmeldung: 27.02.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Kellner, Andreas, 52064, Aachen (DE); Fischer, Alexander, 52064, Aachen (DE)
(74) Vertreter: Volmer, Georg

(56) Entgegenhaltungen:
- EP-A- 0 094 449
- PATENT ABSTRACTS OF JAPAN vol. 006, no. 096 (P-120), 4. Juni 1982 (1982-06-04) & JP 57 030913 A (NISSAN MOTOR CO LTD), 19. Februar 1982 (1982-02-19)

## Beschreibung

Die Erfindung betrifft ein Verfahren zum Steuern von Funktionseinheiten eines Kraftfahrzeugs oder von in einem Kraftfahrzeug angeordneten Geräten mittels Sprachsignalen. Die Erfindung betrifft auch eine Geräteanordnung zur Durchführung dieses Verfahrens.

Grundsätzlich lässt sich der erfindungsgemäße Ansatz, bei beliebigen Geräten mit einer Sprachsteuerung anwenden, bei denen dem Gerät zugeführte Störsignalanteile vom Betriebszustand und/oder der Betriebsumgebung des jeweiligen Geräts abhängen.

Beim Steuern von Funktionseinheiten eines Kraftfahrzeugs (beispielsweise Steuern eines Scheibenwischerantriebs) und von in einem Kraftfahrzeug angeordneten Geräten (beispielsweise Steuern eines Radios, eines Navigationssystems oder eines Mobiltelefons) mittels von einem Spracherkennungssystem zu erkennenden Sprachsignalen müssen Störsignale berücksichtigt werden, die vom Betriebszustand und/oder der Betriebsumgebung des Kraftfahrzeugs abhängen, um eine fehlerhafte Steuerung der Funktionseinheiten bzw. Geräte zu vermeiden.

Aus der JP 57-30913 (A) ist es bekannt, sowohl die Geschwindigkeit eines Kraftfahrzeugs als auch den eingelegten Gang mittels Sensoren zu detektieren. Aus den Sensorsignalen wird eine Rauschsignalreferenzspannung erzeugt, die ein Maß für den aktuellen Rauschpegel (Störsignalpegel) im Kraftfahrzeug angibt. Die Rauschsignalreferenzspannung wird mit der Ausgangsspannung einer Spracheingabeeinheit verglichen. Beim Vorhandensein von Sprachsteuersignalen empfängt die Spracheingabeeinheit akustische Signale, die sowohl Störsignalanteile als auch Sprachsignalanteile enthalten, was sich in der Ausgangsspannung der Spracheingabeeinheit widerspiegelt. Die Ausgangsspannung der Sprach eingabeeinheit wird mit der Rauschsignalieferenzspannung verglichen. Falls die Ausgangsspannung der Spracheingabeeinheit größer als die Rauschsignalreferenzspannung ist, wird ein Spracherkennungssystem aktiviert. Falls die Ausgangsspannung der

Spracheingabeeinheit unter die Rauschsignalreferenzspannung abfällt, wird das Spracherkennungssystem deaktiviert.

Aus der JP 6-83387 (A) ist es bekannt, bei einem Kraftfahrzeug einen Vibrationssensor vorzusehen, um das Vibrieren des Kraftfahrzeugs als Rauschquelle abzuschätzen. Im Kraftfahrzeug ist außerdem ein erstes Mikrofon angeordnet, um im Kraftfahrzeuginnenraum vorhandene Störsignale zu detektieren. Ein zweites Mikrofon im Kraftfahrzeuginnenraum dient zur Detektion von Sprachsignalen, die mit Hilfe eines Spracherkennungssystems erkannt werden sollen. Das zweite Mikrofon empfängt allerdings akustische Signale, die neben Sprachsignalanteilen auch Störsignalanteile enthalten. Mit Hilfe der Signale des Vibrationssensors, der Mikrofonsignale des ersten Mikrofons und zweier adaptiver Filter wird der Störsignalpegel in den vom zweiten Mikrofon erzeugten Mikrofonsignalen reduziert; die so erzeugten Signale mit reduzierten Störsignalanteilen werden einem Spracherkennungssystem zugeführt.

Aus EP 0 094 449 A1 ist ein Spracherkennungssystem für ein Kraftfahrzeug bekannt, bei dem mittels Sprachbefehlen verschiedene Bedienelemente ausgewählt werden können. Dabei können bestimmte Bedienelemente nur aktiviert werden, wenn die Geschwindigkeit unterhalb eines bestimmten Grenzwertes liegt. Dagegen werden Sprachbefehle für andere Bedienelemente nur erkannt, wenn die Geschwindigkeit oberhalb eines bestimmten Grenzwertes liegt. Für die geschwindigkeitsabhängige Spracherkennung umfasst das System einen Geschwindigkeitssensor und eine geschwindigkeitsabhängige Sprachausvwahleinheit.

Der Erfindung liegt die Aufgabe zugrunde, beim eingangs genannten Verfahren Störsignaleinflüssen wirkungsvoll entgegenzuwirken.

Die Aufgabe wird für Kraftfahrzeuganwendungen durch ein Verfahren gemäß Anspruch 1 gelöst.

Das erfindungsgemäße Verfahren hat den Vorteil, dass auf der Basis häufig leicht zu ermittelnder Betriebszustands- oder Betriebsumgebungsinformationen eine geeignete Anpassung des Satzes für die automatische Spracherkennung zu verwendender akustischer Referenzen erfolgt. Bei einem Kraftfahrzeug können Betriebszustands- oder Betriebsumgebungsinformationen beispielsweise aus einem Bordcomputer ausgelesen werden, der mit ein oder mehreren Detektoren zur Ermittlung des Betriebszustands oder der Betriebsumgebung des Kraftfahrzeugs verbunden ist. Ausgehend vom ermittelten Betriebszustand bzw. der ermittelten Betriebsumgebung werden indirekt die Störsignalanteile geschätzt. Eine Extraktion der Störsignalanteile aus den dem Spracherkennunggsystem zugeführten akustischen Signalen kann somit überflüssig gemacht werden. Eine Schätzung der Störsignalanteile kann so erfolgen, dass vorgegebene akustische Referenzen in Abhängigkeit vom detektierten Betriebszustand und/oder von der detektierten Betriebsumgebung selektiert werden, um Sprachpausen zu modellieren, in denen die akustischen Signale lediglich Störsignalanteile aufweisen. Korrespondierend dazu lässt sich ein Vorliegen von Sprachsignalanteilen detektieren, was dann der Fall ist, wenn keine Sprachpause vorliegt; auf diese Weise kann ein fehlerhaftes Detektieren des Vorliegens von Sprachsignalanteilen bei der Änderung der Störsignalanteile vermieden werden. Durch die erfindungsgemäßen Maßnahmen wird die Zuverlässigkeit und Benutzungssicherheit des Gesamtsystems erhöht.

Auch Sprachsignalanteile repräsentierende akustische Referenzen lassen sich mittels der detektierten Betriebszustands- bzw. Betriebsumgebungsinformationen so anpassen, das diesen überlagerte Störsignalanteile durch die akustischen Referenzen repräsentiert sind

Eine zur Durchführung des erfindungsgemäßen Verfahrens geeignete Anordnung gibt Patentanspruch 5 an.

Für beliebige sprachgesteuerte Geräte wird die Aufgabe in entsprechender Weise gemäß den Merkmalen der Patentansprüche 6 (Verfahren) und 7 (Anordnung) gelöst.

Ausführungsbeispiele der Erfindung werden nachstehend anhand der Zeichnungen näher erläutert. Es zeigen:
- Fig.1: die wesentlichen Komponenten zur Durchführung des erfindungsgemäßen Verfahrens in einem Kraftfahrzeug,
- Fig.2: eine erste Möglichkeit zur Erzeugung einer akustischen Referenz für einen Sprachpausenabschnitt und
- Fig.3: eine zweite Möglichkeit zur Erzeugung einer akustischen Referenz für einen Sprachpausenabschnitt.

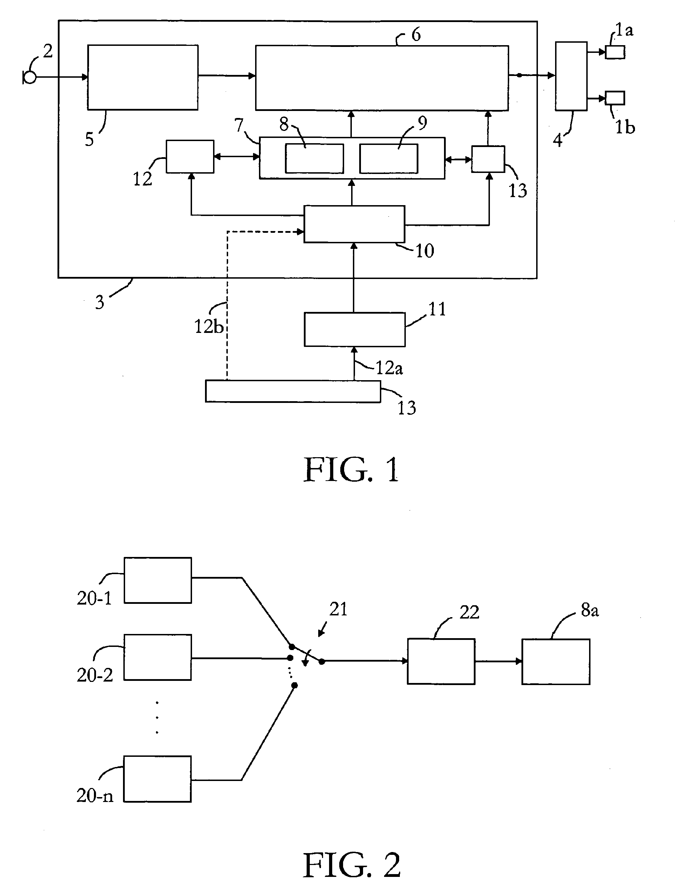

Das in Fig.1 gezeigte Blockschaltbild beschreibt die Steuerung von Geräten oder Funktionseinheiten in einem Kraftfahrzeug. Die Geräte/Funktionseinheiten sind hier beispielhaft durch die Blöcke 1a und 1b dargestellt. Die Steuerung erfolgt mittels Sprachsignalen, die über ein Mikrofon 2 einem automatischen Spracherkennungssystem 3 zugeführt werden, dessen Erkennungsergebnisse von einer Funktionseinheit 4 ausgewertet werden, die eine Umsetzung in an die Geräte/Funktionseinheiten 1a und 1b zu liefernde elektrische Steuersignale bewirkt.

Eine Funktionseinheit 5 kennzeichnet die Extraktion von Merkmalen von vom Mikrofon 2 gelieferten Mikrofonsignalen, wobei Merkmale für die einzelnen aufeinanderfolgenden Signalabschnitte üblicherweise zu Merkmalsvektoren zusammengefasst werden. Bei der Merkmalsanalyse wird ein akustisches Signal beispielsweise abgetastet, quantisiert und schließlich noch einer Cepstralanalyse unterzogen. Dabei erfolgt eine Aufteilung des akustischen Signals in aufeinanderfolgende Rahmen, die sich teilweise überlappen; für jeden Rahmen wind ein Merkmalsvektor gebildet. Die Merkmalsvektorkomponenten werden durch die ermittelten Cepstralwerte gebildet. Funktionsblock 6 beschreibt übliche Vergleichprozeduren, bei denen die Merkmalsvektoren mittels üblicher Suchprozeduren mit einem akustischen Modell 7 verglichen werden, woraus sich das der Funktionseinheit 4 zugeführte Spracherkennungsergebnis ergibt. Dem Vergleich 6 und dem akustischen Modell 7 liegen sogenannte Hidden-Markov-Modelle zugrunde. Das akustische Modell 7 weist akustische Referenzen 8 und ein Lexikon 9 auf. Eine Wortuntereinheit von jeweils einem oder mehreren Phonemen ist dabei jeweils eine akustische Referenz zugeordnet. Durch das Lexikon 9 sind entsprechend den im Lexikon zusammengefassten Worten zugehörige Folgen von Wortuntereinheiten definiert.

Das Spracherkennungssystem 3 weist eine Schnittstelle 10 auf, die eine Verbindung zu einem Bordcomputer 11 des Kraftfahrzeugs herstellt. Der Bordcomputer 11 wiederum ist durch eine Verbindung 12a mit mindestens einem Detektor 13 verbunden, der Betriebszustands- und/oder Betriebsumgebungsinformationen detektiert und dem Bordcomputer 11 zuführt, der entsprechende Daten speichert. Die Betriebszustands- und/oder Betriebsumgebungsdaten werden der Schnittstelle 10 zugeführt, die diese Daten an eine Funktionseiheit 12 weiterleitet, die zur Anpassung der akustischen Referenzen 8 an den jeweils detektierten Betriebszustand bzw. an die detektierte Betriebsumgebung anpasst. Grundsätzlich kann die Schnittstelle 10 auch ohne Zwischenschaltung eines Bordcomputers mit dem Detektor 13 gekoppelt sein (Verbindung 12b). Ein detektierter Betriebszustand wäre bspw. der Betriebszustand eines Lüfters oder auch die jeweilige Geschwindigkeit des Kraftfahrzeuges. Die Betriebsumgebungsdaten könnten bspw. Regenwetter indizieren oder auch den aktuellen Bodenbelag, auf dem das Kraftfahrzeug fährt.

Vorzugsweise können durch das beschriebene System Sprachpausenmodelle mit geeigneten akustischen Referenzen 8 erzeugt werden. Für Sprachpausen enthält ein vom Mikrofon 2 empfangenes akustisches Signal lediglich Störsignalanteile, jedoch keine Sprachsignalanteile, mit denen eine Steuerung der Geräte/Funktionseinheiten 1a oder 1b erfolgen soll.

Eine Ausgestaltung der Erfindung besteht darin, in Abhängigkeit von einem detektierten Betriebszustand oder einer detektierten Betriebsumgebung das Vokabular des Spracherkennungssystems 3, das durch das Lexikon 9 zusammengefasst ist, auf eine Untermenge von Worten einzuschränken, die als wirksame Sprachsteuersignale zur Verfügung stehen (Funktionsblock 13). Bei diesem Ansatz werden die für die Vergleichsprozeduren des Funktionsblockes 6 erforderlichen Rechenoperationen reduziert.

Fig.2 zeigt ein Beispiel zur Erzeugung einer akustischen Referenz 8a aus der Menge der akustischen Referenzen 8. Mittels der Funktionseinheit 12 wird hier aus einer Menge a priori vorgegebener und vordefinierter Basisreferenzen 20-1, 20-2 bis 20-n für Sprachpausenabschnitte diejenige Basisreferenz ausgewählt, die schon vor der Inbetriebnahme des Spracherkennungssystems 3 demjenigen Betriebszustand bzw. derjenigen Betriebsumgebung zugeordnet wurde, und die dem aktuell detektierten Betriebszustand bzw. der aktuell detektierten Betriebsumgebung am besten entspricht. Die Auswahl einer Basisreferenz ist symbolisch durch einen Schalter 21 dargestellt. Funktionsblock 22 fasst eine optionale Adaption der selektierten Basisreferenz zusammen, um eine genauere Modellierung des detektierten Betriebszustandes bzw. der detektierten Betriebsumgebung zu erreichen und so die zu verwendende akustische Referenz 8a für den betreffenden Sprachpausenabschnitt zu bilden. Wenn bspw. eine akustische Basisreferenz einem Störsignalanteil entspricht, der sich aus einem Regengeräusch ableitet, wird bei der Adaption gemäß Block 22 eine Anpassung an die detektierte Stärke des Regens erfolgen, wobei die Stärke des Regens mit einem entsprechenden Stör-/Rauschsignalpegel im Kraftfahrzeug korrespondiert.

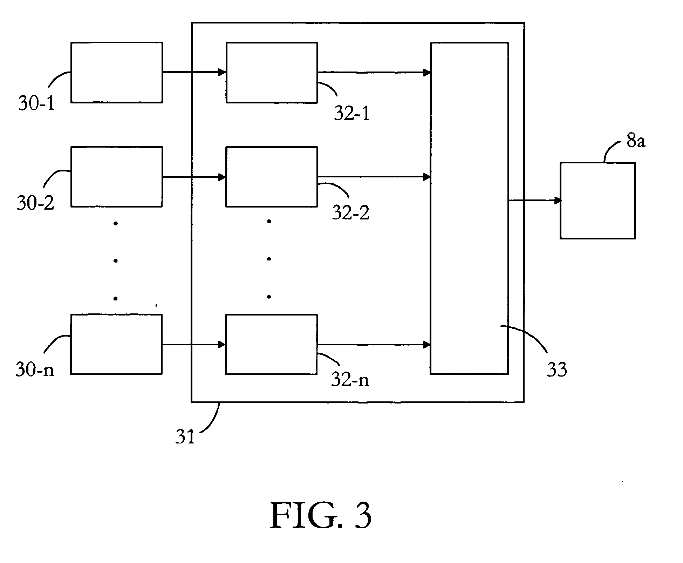

Fig.3 zeigt eine weitere Variante zur Erzeugung der akustischen Referenz 8a für einen Sprachpausenabschnitt. Wie schon in Fig.2 sind a priori vorgegebene Basisreferenzen für Sprachpausenabschnitte (Blöcke 30-1, 30-2 bis 30-n) vorgesehen, mittels derer die akustische Referenz 8a gebildet wird. In der Ausführungsform gemäß Fig.3 wird allerdings nicht eine einzelne Basisreferenz selektiert. Es werden vielmehr alle Basisreferenzen einer Funktionseinheit 31 zugeführt, in der zunächst in Abhängigkeit von dem jeweils detektierten Betriebszustand bzw. der jeweils detektierten Betriebsumgebung eine Gewichtung und ggf. auch eine Adaption der Basisreferenzen durchgeführt wird (Blöcke 32-1, 32-2 bis 32-n). Die so gebildeten gewichteten/adaptierten Basisreferenzen werden schließlich in einer Einheit 33 zu einer einzigen akustischen Referenz kombiniert, welche die zu verwendende akustische Referenz 8a für den betrachteten Sprachpausenabschnitt ist.

Die Erfindung ist nicht auf die Sprachpausenmodellierung beschränkt. Grundsätzlich können auch die Wortuntereinheiten entsprechenden akustischen Referenzen 8 in entsprechender Weise an einen detektierten Betriebszustand bzw. eine detektierte Betriebsumgebung des Kraftfahrzeugs angepasst werden. Die akustische Referenz 8a würde dann die Grundlage für die Adaption von Wortunterabschnitten repräsentierenden akustischen Referenzen 8 bilden, um Störsignalanteile eines vom Mikrofon 2 aufgenommenen akustischen Signals zu modellieren.

Darüber hinaus ist die beschriebene Erfindung nicht auf den Einsatz in Kraftfahrzeugen beschränkt. Die Erfindung ist grundsätzlich anwendbar auf alle mittels Sprachsteuerung gesteuerten Geräte, bei denen Sprachsteuersignalen Störsignale überlagert sind, die sich indirekt durch Detektion des Betriebszustandes bzw. der Betriebsumgebung eines solchen Gerätes bestimmen lassen.

## Patentansprüche

1. Verfahren zum Steuern von Funktionseinheiten eines Kraftfahrzeugs oder von in einem Kraftfahrzeug angeordneten Geräten (1a, 1b) mittels Sprachsignalen, bei dem
- im Kraftfahrzeug auftretende akustische Signale, die vom Betriebszustand und/oder der Betriebsumgebung des Kraftfahrzeugs abhängige Störsignalanteile und gegebenenfalls Sprachsignalanteile enthalten, einem Spracherkennungssystem (3) zugeführt werden und
- das Spracherkennungssystem (3) akustische Referenzen (8) verwendet, die in Abhängigkeit von detektierten Betriebszustands- und/oder Betriebsumgebungsinformationen ausgewählt und/oder adaptiert werden,
**dadurch gekennzeichnet,**
**dass** akustische Basisreferenzen (20-1 ... 20-n, 30-1 ... 30-n) in Abhängigkeit vom Betriebszustand und/oder der Betriebsumgebung des Kraftfahrzeugs zur Verwendung für eine Sprachpausenmodellierung selektiert werden.

2. Verfahren nach Anspruch 1,
**dadurch gekennzeichnet**,
das eine Adaption (22, 32-1 ... 32-n) der selektierten akustischen Basisreferenzen in Abhängigkeit vom Betriebszustand und/oder der Betriebsumgebung des Kraftfahrzeugs vorgesehen ist.

3. Verfahren nach einem der Ansprüche 1 oder 2,
**dadurch gekennzeichnet,**
**dass** Betriebszustandsdaten und/oder Betriebsumgebungsdaten des Kraftfahrzeugs aus einem Bordcomputer (11) des Kraftfahrzeugs ausgelesen und/oder mittels ein oder mehrerer am Kraftfahrzeug montierter Detektoren (13) ermittelt werden.

4. Verfahren nach einem der Ansprüche 1 bis 3,
**dadurch gekennzeichnet,**
**dass** in Abhängigkeit von den detektierten Betriebszustands- und/oder Betriebsumgebungsinformationen des Kraftfahrzeugs diejenigen Teile des Vokabulars (9) des Spracherkennungssystems (3) bestimmt werden (13), die zum Steuern von Funktionseinheiten des Kraftfahrzeugs oder von im Kraftfahrzeug angeordneten Geräten (1a,1b) wirksame Sprachsteuersignale darstellen.

5. Anordnung zum Steuern von Funktionseinheiten eines Kraftfahrzeugs oder in einem Kraftfahrzeug angeordneter Geräte (1a, 1b) mittels Sprachsignalen mit
- mindestens einem Mikrofon (2) zur Umwandlung von im Kraftfahrzeug auftretenden akustischen Signalen, die vom Betriebszustand und/oder der Betriebsumgebung des Kraftfahrzeugs abhängige Störsignalanteile und gegebenenfalls Sprachsignalanteile enthalten, in Mikrofonsignale und
- einem mit dem Mikrofon (2) gekoppelten Spracherkennungssystem (3) zur Erkennung von Sprachsignalanteilen der akustischen Signale, wobei eine Auswahl und/oder ein Adaptieren von vom Spracherkennungssystem (3) verwendeten akustischen Referenzen (8) in Abhängigkeit von detektierten Betriebszustands- und/oder Betriebsumgebungsinformationen vorgesehen ist,
**dadurch gekennzeichnet,**
**dass** das Spracherkennungssystem (3) zur Selektion von akustischen Basisreferenzen (20-1 ... 20-n, 30-1 ... 30-n) in Abhängigkeit vom Betriebszustand und/oder der Betriebsumgebung des Kraftfahrzeugs zur Verwendung für eine Sprachpausenmodellierung vorgesehen ist.

6. Verfahren zum Steuern eines Geräts mittels Sprachsignalen, bei dem
- akustische Signale, die vom Betriebszustand des Geräts und/oder der Betriebsumgebung des Geräts abhängige Störsignalanteile und gegebenenfalls Sprachsignalanteile enthalten, einem Spracherkennungssystem zugeführt werden und
- das Spracherkennungssystem akustische Referenzen verwendet, die in Abhängigkeit von detektierten Betriebszustands- und/oder Betriebsumgebungsinformationen des Geräts ausgewählt und/oder adaptiert werden,
**dadurch gekennzeichnet,**
**dass** akustische Basisreferenzen in Abhängigkeit vom Betriebszustand und/oder der Betriebsumgebung des Geräts Verwendung für eine Sprachpausenmodellierung selektiert werden.

7. Anordnung mit einem mittels Sprachsignalen steuerbaren Gerät mit mindestens einem Mikrofon und einem mit dem Mikrofon gekoppelten Spracherkennungssystem, bei dem
- akustische Signale, die vom Betriebszustand des Geräts und/oder der Betriebsumgebung des Geräts abhängige Störsignalanteile und gegebenenfalls Sprachsignalanteile enthalten, dem Spracherkennungssystem zugeführt werden und
- das Spracherkennungssystem akustische Referenzen verwendet, die in Abhängigkeit von detektierten Betriebszustands- und/oder Betriebsumgebungsinformationen des Geräts ausgewählt und/oder adaptiert werden,
**dadurch gekennzeichnet,**
**dass** das Spracherkennungssystem zur Selektion von akustischen Basisreferenzen in Abhängigkeit vom Betriebszustand und/oder der Betriebsumgebung des Geräts zur Verwendung für eine Sprachpausenmodellierung vorgesehen ist.

## Claims

1. A method of controlling function units of a motorcar or of devices (1a, 1b) installed in a motorcar by means of speech signals, in which
acoustic signals occurring in the motorcar, which contain noise signal portions that depend on the operating state and/or operation environment of the motorcar and possibly speech signal portions, are applied to a speech recognition system (3), and
the speech recognition system (3) uses acoustic references (8) which are selected and/or adapted in dependence on detected data relating to the operating state and/or operation environment,
**characterized in that** acoustic basic references (20-1, ..., 20-n, 30-1 ... 30-n) are selected to be used for a speech pause modeling in dependence on the operating state and/or the operation environment of the motorcar.

2. A method as claimed in claim 1,
**characterized in that** an adaptation is provided (22, 32-1, ... 32-n) of the selected acoustic basic references in dependence on the operating state and/or operation environment of the motorcar.

3. A method as claimed in claim 1 or 2,
**characterized in that** data relating to the operating state and/or operation environment of the motorcar are read from an on-board computer (11) of the motorcar and/or by means of one or more detectors (13) installed in the motorcar.

4. A method as claimed in one of the claims 1 to 3,
**characterized in that**, in dependence on the detected data relating to the operating state and/or operation environment of the motorcar, those parts of the vocabulary (9) of the speech recognition system (3) are determined (13) that represent speech control signals that have their effect on the control of function units of the motorcar or on devices (1a, 1b) installed inside the motorcar.

5. An arrangement for controlling function units of a motorcar or of devices (1a, 1b) installed in a motorcar by means of speech signals, comprising
at least one microphone (2) for converting acoustic signals occurring in the motorcar, which acoustic signals contain noise signal portions that depend on the operating state and/or operation environment of the motorcar and possibly speech signal portions, into microphone signals, and
a speech recognition system (3) coupled to the microphone (2) for recognizing speech signal portions of the acoustic signals, wherein acoustic references (8) used by the speech recognition system (3) are selected and/or adapted in dependence on detected data relating to the operating state and/or operation environment,
**characterized in that** the speech recognition system (3) is designed for selecting acoustic basic references (20-1, ..., 20-n, 30-1 ... 30-n) in dependence on the operating state and/or operation environment of the motorcar such that said references can be used for a speech pause modeling.

6. A method of controlling a device by means of speech signals, in which
acoustic signals, which contain noise signal portions that depend on the operating state of the device and/or the operation environment of the device and possibly speech signal portions, are applied to a speech recognition system and
the speech recognition system uses acoustic references which are selected and/or adapted in dependence on detected data relating to the operating state and/or operation environment of the device,
**characterized in that** acoustic basic references are selected in dependence on the operating state and/or operation environment of the device such that said references can be used for a speech pause modeling.

7. An arrangement comprising a device that is controllable via speech signals and that comprises at least one microphone and a speech recognition system coupled to said microphone, in which
acoustic signals, which contain noise signal portions that depend on the operating state and/or the operation environment of the device and possibly speech signal portions, are applied to said speech recognition system, and
the speech recognition system uses acoustic references which are selected and/or adapted in dependence on detected data relating to the operating state and/or operation environment of the device,
**characterized in that** the speech recognition system is designed for selecting acoustic basic references in dependence on the operating state and/or operation environment of the device such that said references can be used for a speech pause modeling.

## Revendications

1. Procédé de commande d'unités fonctionnelles d'un véhicule automobile ou d'appareils (1a, 1b) disposés dans un véhicule automobile à l'aide de signaux de parole dans lequel :
- les signaux acoustiques se produisant dans le véhicule automobile qui contiennent des composantes de signal parasite dépendant de l'état de fonctionnement et/ou de l'environnement de fonctionnement du véhicule automobile et, éventuellement, des composantes de signal de parole sont amenés à un système de reconnaissance de parole (3) et
- le système de reconnaissance de parole (3) utilise des références acoustiques (8) qui sont sélectionnées et/ou adaptées en fonction des informations détectées à propos de l'état de fonctionnement et/ou de l'environnement de fonctionnement,
**caractérisé en ce**
**que** les références de base acoustiques (20-1 ... 20-n, 30-1 ... 30-n) sont sélectionnées en fonction de l'état de fonctionnement et/ou de l'environnement de fonctionnement du véhicule automobile en vue de leur utilisation pour une modélisation des pauses de parole.

2. Procédé selon la revendication 1,
**caractérisé en ce**
**qu'**une adaptation (22, 32-1 ... 32-n) des références de base acoustiques sélectionnées est prévue en fonction de l'état de fonctionnement et/ou de l'environnement de fonctionnement du véhicule automobile.

3. Procédé selon l'une des revendications 1 ou 2,
**caractérisé en ce**
**que** les données sur l'état de fonctionnement et/ou les données sur l'environnement de fonctionnement du véhicule automobile sont lues à partir d'un ordinateur de bord (11) du véhicule automobile et/ou déterminées à l'aide d'un ou plusieurs détecteurs (13) montés sur le véhicule automobile.

4. Procédé selon l'une des revendications 1 à 3,
**caractérisé en ce**
**qu'**en fonction des informations détectées sur l'état de fonctionnement et/ou de l'environnement de fonctionnement du véhicule automobile, on détermine les parties (13) du vocabulaire (9) du système de reconnaissance de parole (3) qui représentent des signaux de commande de parole actifs pour la commande d'unités fonctionnelles du véhicule automobile ou d'appareils (1a, 1b) disposés dans le véhicule automobile.

5. Dispositif de commande d'unités fonctionnelles d'un véhicule automobile ou d'appareils (1a, 1b) disposés dans un véhicule automobile à l'aide de signaux de parole avec :
- au moins un microphone (2) pour la conversion de signaux acoustiques survenant dans le véhicule automobile qui contiennent des composantes de signal parasite dépendant de l'état de fonctionnement et/ou de l'environnement de fonctionnement du véhicule automobile et, éventuellement, des composantes de signal de parole en signaux de microphone et
- un système de reconnaissance de parole (3) couplé avec le microphone (2) pour la reconnaissance de composantes de signal de parole des signaux acoustiques, une sélection et/ou une adaptation des références (8) acoustiques utilisées par le système de reconnaissance de parole (3) étant prévue en fonction des informations détectées sur l'état de fonctionnement et/ou l'environnement de fonctionnement,
**caractérisé en ce**
**que** le système de reconnaissance de parole (3) est prévu pour la sélection de références acoustiques de base (20-1 ... 20-n, 30-1 ... 30-n) en fonction de l'état de fonctionnement et/ou de l'environnement de fonctionnement du véhicule automobile à utiliser pour une modélisation des pauses de parole.

6. Procédé de commande d'un appareil à l'aide de signaux de parole, dans lequel
- les signaux acoustiques qui contiennent des composantes de signal parasite dépendant de l'état de fonctionnement et/ou de l'environnement de fonctionnement du véhicule automobile et, éventuellement, des composantes de signal de parole sont amenés à un système de reconnaissance de parole (3) et
- le système de reconnaissance de parole (3) utilise des références acoustiques (8) qui sont sélectionnées et/ou adaptées en fonction des informations détectées à propos de l'état de fonctionnement et/ou de l'environnement de fonctionnement,
**caractérisé en ce**
**que** les références de base acoustiques sont sélectionnées en fonction de l'état de fonctionnement et/ou de l'environnement de fonctionnement de l'appareil en vue de leur utilisation pour une modélisation des pauses de parole.

7. Dispositif avec un appareil à commander à l'aide de signaux de parole doté d'au moins un microphone et un système de reconnaissance de parole couplé au microphone dans lequel :
- les signaux acoustiques se produisant dans le véhicule automobile qui contiennent des composantes de signal parasite dépendant de l'état de fonctionnement et/ou de l'environnement de fonctionnement du véhicule automobile et, éventuellement, des composantes de signal de parole sont amenés à un système de reconnaissance de parole et
- le système de reconnaissance de parole utilise des références acoustiques qui sont sélectionnées et/ou adaptées en fonction des informations détectées à propos de l'état de fonctionnement et/ou de l'environnement de fonctionnement,
**caractérisé en ce**
**que** le système de reconnaissance de parole est prévu pour la sélection de références acoustiques de base en fonction de l'état de fonctionnement et/ou de l'environnement de fonctionnement de l'appareil à utiliser pour une modélisation des pauses de parole.
